# FASCICULE DE BREVET EUROPEEN

(11) **EP 1 984 248 B1**
(45) Date de publication et mention de la délivrance du brevet: **30.12.2009**
(21) Numéro de dépôt: 07730879.9
(22) Date de dépôt: 29.01.2007
(51) Int. Cl.: B64D 29/08

(54) **NACELLE DE TURBOREACTEUR A OUVERTURE LATERALE DES CAPOTS**
TRIEBWERKGONDEL MIT SEITLICHER ÖFFNUNG IN DER ABDECKUNG
TURBOJET ENGINE NACELLE WITH COWLS OPENING LATERALLY

(30) Priorité: 16.02.2006 FR 0601350
(43) Date de publication de la demande: 29.10.2008
(73) Titulaire: Aircelle, 76700 Gonfreville l'Orcher (FR)
(72) Inventeur: VAUCHEL, Guy, Bernard, F-76610 Le Havre (FR); VICOGNE, Laurent, Marcel, F-76000 Le Havre (FR); BOURET, Georges, Alain, F-76133 Epouville (FR); CAZUC, Xavier, F-76610 Le Havre Rouelles (FR)
(74) Mandataire: Jouanneau, Lionel
(86) Numéro de dépôt international: PCT/FR2007/000161
(87) Numéro de publication internationale: WO 2007/093683

(56) Documents cités:
- US-A- 4 920 744
- US-A- 5 755 403
- US-A- 5 944 285
- US-A- 6 032 901
- US-B1- 6 220 546

## Description

La présente invention se rapporte à une nacelle de turboréacteur destinée à être rattachée à une structure d'un avion par un mât de liaison et comprenant au moins une partie mobile apte à être ouverte de manière à permettre un accès à l'intérieur de la nacelle.

Un avion est propulsé par un ou plusieurs ensembles propulsifs comprenant un turboréacteur logeant dans une nacelle tubulaire. Chaque ensemble propulsif est rattaché à l'avion par un mât situé généralement sous une aile ou au niveau du fuselage.

Une nacelle présente généralement une structure comprenant une entrée d'air en amont du moteur, une section amont destinée à entourer une soufflante du turboréacteur, une section médiane abritant des moyens d'inversion de poussée et destinée à entourer la chambre de combustion du turboréacteur, et une tuyère d'éjection dont la sortie est située en aval du turboréacteur.

En plus d'abriter le turboréacteur et de canaliser les flux d'air qu'il génère, une nacelle abrite également un ensemble de dispositifs d'actionnement annexes liés à son fonctionnement et assurant diverses fonctions lorsque le turboréacteur est en marche ou à l'arrêt.

On compte généralement trois principaux systèmes d'actionnement annexes intégrés dans une nacelle à savoir, l'ouverture radiale de capotages pour la maintenance du turboréacteur, le déploiement et l'escamotage de capots mobiles, et l'ouverture radiale des deux demi-parties de l'inverseur de poussée pour la réalisation d'opérations de maintenance plus poussées sur le moteur lui-même.

Pour ce faire, on connaît des structures de nacelles formées de deux demi-parties pouvant s'ouvrir radialement autour d'un axe longitudinal situé au voisinage du mât. Une telle structure est appelée « C-duct ».

Une structure « C-duct » offre un accès au moteur pour la réalisation d'opérations de maintenance au sol après déverrouillage de systèmes de maintien des demi-parties puis pivotement de ces dernières autour de l'axe longitudinal voisin du mât par lequel la nacelle est reliée à l'aile ou au fuselage. Les demi-parties sont liées entre elles en partie inférieure par des verrous.

Un tel mode d'ouverture de la nacelle pose toutefois des problèmes lorsque celle-ci est proche de la structure de l'avion, notamment de l'aile. En effet, lors d'interventions de maintenance sur le turboréacteur, les demi-parties et capotages de la nacelle qui sont situés sous l'aile ne peuvent être ouverts au-delà d'un certain angle, ceux-ci étant bloqués par l'aile ou plus généralement par la structure de l'avion.

Il en résulte une ouverture limitée qui réduit voire empêche l'accès à certaines zones de la nacelle et du turboréacteur. On pourra notamment citer les zones supérieures du turboréacteur, zones dans laquelle se situent de nombreux systèmes de commande en provenance de l'avion destinés au turboréacteur et à la nacelle.

Par ailleurs, il peut être nécessaire de remplacer des éléments recouvrant l'intérieur de la structure de la nacelle, telles que des protections thermiques par exemple, qui sont difficilement accessibles à cause de l'ouverture insuffisante de la nacelle.

Une solution est alors de démonter la nacelle. Une telle opération n'est généralement pas souhaitée car longue et coûteuse. De plus, elle nécessite une main d'oeuvre importante.

On pourra également noter que l'ouverture radiale des demi-parties ou des capotages nécessite la présence de vérins d'ouverture puissants à l'intérieur de la nacelle, ces vérins devant être aptes à supporter le poids des capotages ou demi-parties, ainsi que de bielles permettant de sécuriser ces capotages et demi-parties en position ouverte. Ces éléments représentent un poids et un espace d'occupation importants.

Afin de pallier les inconvénients précédemment évoqués, on connaît une nacelle de turboréacteur comprenant au moins une partie mobile montée pivotante autour d'un axe de pivotement orienté selon un axe sensiblement perpendiculaire au plan de la structure de l'avion à laquelle la nacelle est rattachée.

Ainsi, en prévoyant une ouverture par pivotement autour d'un axe non plus parallèle au plan de la structure de l'avion à laquelle est rattachée la nacelle (longitudinal pour une fixation sous aile), mais perpendiculaire (sensiblement perpendiculaire pour une fixation sous aile), la partie mobile n'est pas gênée par la structure de l'avion à laquelle elle est rattachée et peut donc être ouverte plus largement de manière à permettre un accès total à l'intérieur de la nacelle et au moteur. De plus, comme il n'est plus nécessaire de soulever la partie mobile, l'ouverture peut éventuellement se faire manuellement ou à l'aide de moyens d'actionnement moins puissants.

Le document US 6 220 546, qui montre toutes les caractéristiques du préambule de la revendication 1, décrit une telle nacelle à ouverture latérale facilitant l'accès à l'intérieur de la nacelle par l'intermédiaire de capots latéraux montés mobiles selon un double mouvement de translation sensiblement équivalent à un mouvement de rotation du capot mobile. Toutefois l'accès à l'intérieur de la nacelle reste limité et un système selon US 6 220 546 présente toujours des problèmes de dégagement des capots mobiles.

La présente invention vise à pallier ces inconvénients et consiste pour ce faire en une nacelle de turboréacteur destinée à être rattachée à une structure d'un avion par un mât de liaison et comprenant au moins une partie mobile apte à être ouverte de manière à permettre un accès à l'intérieur de la nacelle, ladite partie mobile étant montée pivotante autour d'un axe de pivotement orienté selon un axe sensiblement perpendiculaire au plan de la structure de l'avion à laquelle la nacelle est rattachée, ladite nacelle étant caractérisée en ce que l'axe de pivotement est monté sur la nacelle grâce à des moyens de déplacement aptes à permettre une inclinaison dudit axe de pivotement par rapport à sa direction initiale. Ainsi, il est possible d'optimiser encore l'ouverture de la partie mobile.

Ainsi, il est possible d'optimiser encore l'ouverture de la partie mobile.

Avantageusement, l'axe de pivotement est monté sur la nacelle grâce à des moyens de déplacement aptes à permettre un déplacement latéral dudit axe de pivotement. Ceci permet d'écarter légèrement la partie mobile de la nacelle de manière à permettre une ouverture encore plus grande.

De manière préférentielle, la partie mobile comprend un couteau apte à loger dans une gorge ménagée dans une partie fixe de la nacelle et apte à empêcher la rotation de la partie mobile en l'absence d'un écartement préalable de l'axe de pivotement en vue de dégager le couteau de la gorge. De tels moyens permettent d'assurer le verrouillage de la partie mobile en position fermée. Bien évidemment, on pourra prévoir d'autres moyens de verrouillage communément utilisés.

Préférentiellement, les moyens de déplacement sont des vérins possédant une première extrémité ancrée dans une partie fixe de la nacelle et une deuxième extrémité rattachée à l'axe de pivotement de la partie mobile. Avantageusement, les vérins sont des vérins électriques. Alternativement on pourra envisager un système rail / glissière pouvant être manoeuvré manuellement ou être motorisé

De manière préférentielle, au moins une partie mobile est une demi-partie d'inverseur de poussée. Avantageusement, l'axe de pivotement est situé sensiblement au niveau d'un cadre avant de l'inverseur de poussée.

De manière préférentielle encore, au moins une partie mobile est un capot de soufflante.

Avantageusement, la nacelle comprend des moyens d'actionnement aptes à faire pivoter la partie mobile autour de l'axe de pivotement. Avantageusement encore, les moyens d'actionnement sont des vérins, de préférence électriques.

De manière avantageuse, la nacelle comprend au moins une bielle de sécurité possédant une première extrémité fixée sur une structure fixe de la nacelle et une deuxième extrémité rattachée à la partie mobile, de préférence sur sa structure amont, ladite bielle de sécurité étant apte à passer alternativement d'une position dans laquelle elle empêche la fermeture de la partie mobile à une position dans laquelle elle permet sa fermeture.

La mise en oeuvre de l'invention sera mieux comprise à l'aide de la description détaillée qui est exposée ci-dessous en regard du dessin annexé dans lequel :
La figure 1 est une vue de face en coupe transversale d'une nacelle selon l'invention en position fermée.
La figure 2 est une vue de côté en coupe longitudinale de la nacelle de la figure 1.
La figure 3 est une vue de dessous de la nacelle de la figure 1.
La figure 4 est une vue de dessous de la nacelle de la figure 1 en cours d'ouverture.
La figure 5 est une vue de face de la nacelle de la figure 1 en position d'ouverture.
La figure 6 est une vue de côté de la nacelle de la figure 5.
La figure 7 est une vue de dessous de la nacelle de la figure 5.
Les figures 8 et 9 montrent un agrandissement du verrouillage entre la partie mobile et la structure de la nacelle.
La figure 10 est une représentation schématique d'une nacelle selon l'invention dont l'ouverture est assistée mécaniquement.

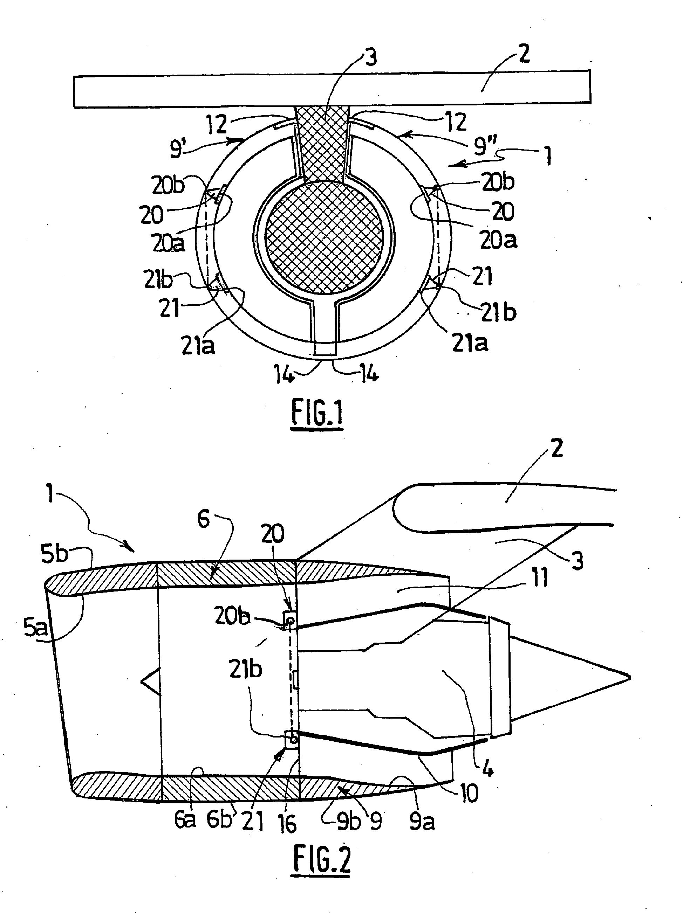

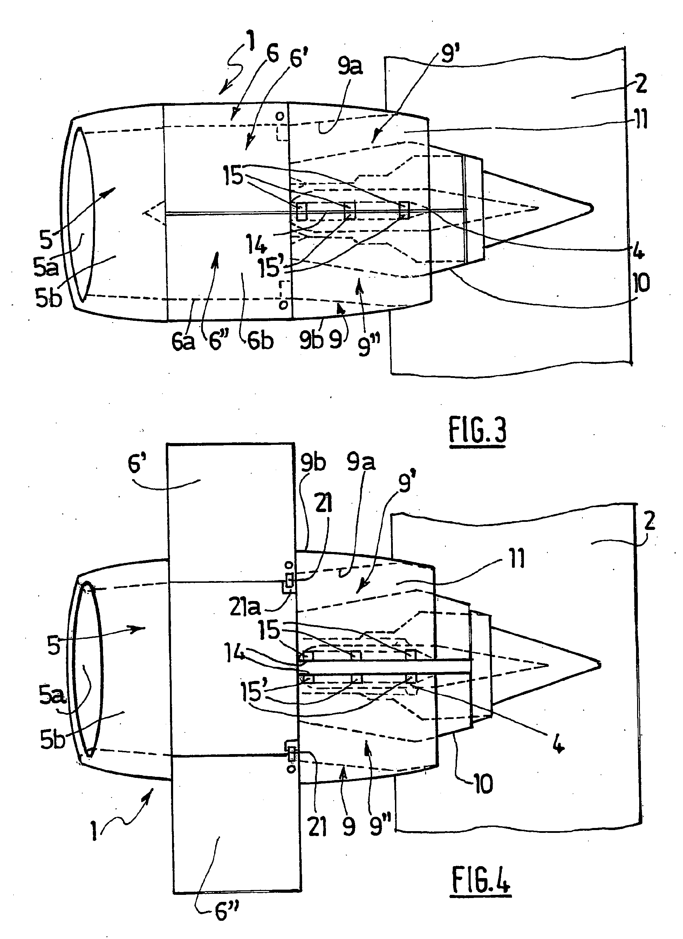

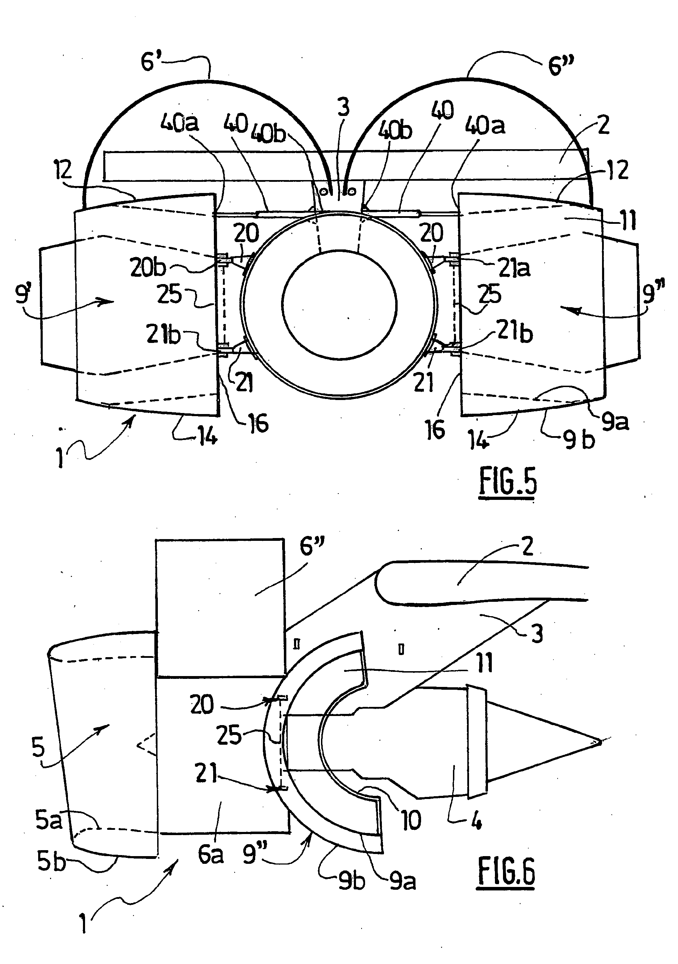

Une nacelle 1 selon l'invention telle que représentée sur les figures 1 à 7 est destinée à être rattachée sous une aile 2 d'un avion (non visible) par l'intermédiaire d'un mât 3 oblique orienté vers l'avant de l'avion.

Cette nacelle 1 constitue un logement tubulaire pour un turboréacteur 4 dont elle sert à canaliser les flux d'air qu'il génère. Elle abrite également différents composants nécessaires au fonctionnement du turboréacteur 4.

Plus précisément, la nacelle 1 possède une structure externe comprenant une section avant formant une entrée d'air 5, une section médiane 6 entourant une soufflante du turboréacteur, et une section arrière 9 entourant le moteur et abritant un système d'inversion de poussée (non visible).

L'entrée d'air 5 présente une surface interne 5a destinée à canaliser l'air entrant et une surface externe 5b de carénage.

La section médiane 6 comprend, d'une part, un carter 6a interne entourant la soufflante du turboréacteur 4, et d'autre part, une structure externe 6b de carénage du carter prolongeant la surface externe 5b de la section d'entrée d'air 5. Le carter 6a est rattaché à la section d'entrée d'air 5 qu'elle supporte et prolonge sa surface interne 5a. La structure externe 6b de carénage est réalisée sous la forme de capots 6', 6" mobiles situés de part et d'autre de la nacelle 1 par rapport à l'axe du mât 3 et se rejoignant sous la nacelle. Chaque capot 6', 6" est monté pivotant autour d'un axe sensiblement horizontal situé à proximité du mât 3.

La section arrière 9 prolonge la section médiane 6 et comprend une structure externe présentant une surface interne 9a dans la continuité du carter 6a et une surface externe 9b dans la continuité de la structure externe 6b de carénage de la section médiane 6. Elle comprend également une structure interne 10 de carénage du moteur définissant avec la surface interne 9a une veine 11 destinée à la circulation d'un flux d'air froid dans le cas d'un turboréacteur double flux tel qu'ici représenté.

La section arrière 9 est réalisée sous la forme de deux demi-parties 9', 9" latérales situées de part et d'autre de la nacelle 1.

Chaque demi-partie 9', 9" comprend un bord supérieur 12 équipé de verrous (non visibles) aptes à coopérer avec le mât 3 et un bord inférieur 14 équipé de moyens de verrouillage 15', 15" aptes à coopérer avec des moyens de verrouillage complémentaires 15", 15' du bord inférieur 14 de l'autre demi partie 9", 9'. L'ensemble de la structure externe de la section arrière 9 et de la structure interne 10 de chaque demi-partie 9', 9" est supporté par un cadre avant 16 lui-même supporté par le carter 6a avec lequel il est monté pivotant.

Pour ce faire, chaque cadre avant 16 est relié au carter 6a entourant la soufflante par l'intermédiaire d'un vérin supérieur 20 et d'un vérin inférieur 21 parallèles entre eux et sensiblement horizontaux, chacun possédant une première extrémité 20a, 21a fixe ancrée sur le carter 6a et une deuxième extrémité 20b, 21b rattachée au cadre avant 16 par une liaison rotule (non visible). La deuxième extrémité 20b du vérin supérieur 20 et la deuxième extrémité 21 b du vérin inférieur 21 définissent un axe 25 sensiblement vertical autour duquel la demi-partie 9', 9" correspondante est apte à pivoter.

En variante, chaque demi partie 9', 9" peut être rattachée au carter 6a par l'intermédiaire de simples points d'articulation définissant pareillement un axe 25 transversal sur lesquels la demi-partie 9', 9" correspondante est montée pivotante autour dudit axe 25.

En variante également les vérins supérieurs 20 et les vérins inférieurs 21 peuvent être rattachés à la demi-partie 9', 9" correspondante par une simple liaison permettant la rotation de la demi-partie 9', 9" autour de l'axe 25 définit par les deuxièmes extrémités 20b, 21 b des vérins 20, 21.

Les avantages apportés, d'une part, par les vérins 20, 21, et d'autre part, par une liaison rotule seront discutés en détail dans la partie décrivant l'ouverture de la nacelle 1.

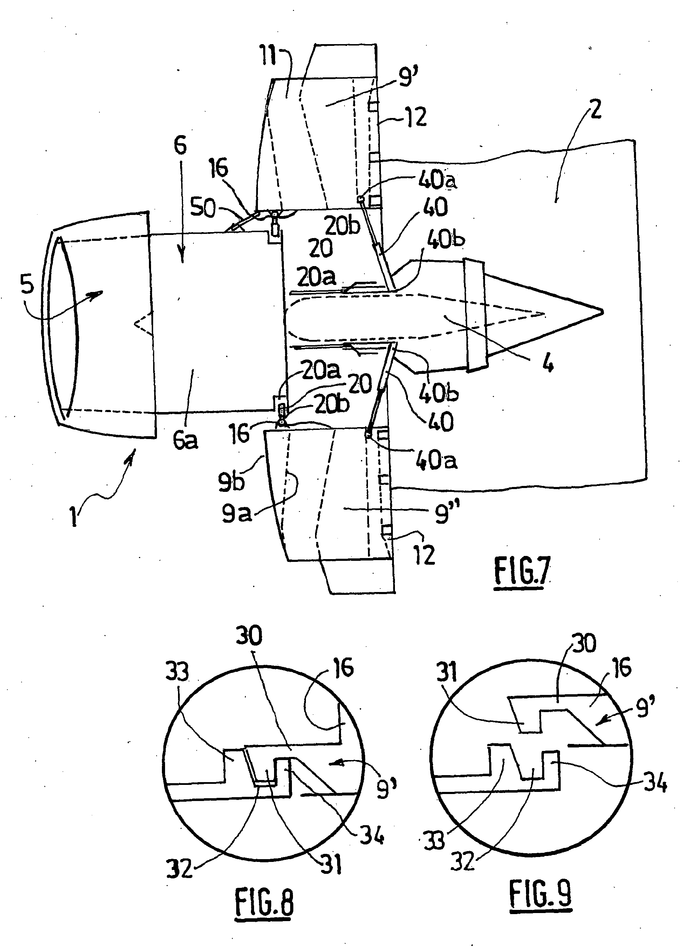

En complément chaque demi-partie 9', 9" est équipée d'un système de verrouillage apte à coopérer avec des moyens de verrouillage complémentaires du carter 6a. Un tel système est représenté en détail sur les figures 8 et 9. Le cadre avant 16 de chaque demi-partie 9', 9" présente un prolongement 30 longitudinal terminé par un retour formant couteau 31 orienté en direction du carter 6a.

Ce couteau 31 est destiné à coopérer avec une gorge 32 équipant le carter 6a et présentant une bordure externe 33 et une bordure interne 34. Le fonctionnement du système de verrouillage sera expliqué lors de la description de l'ouverture de la nacelle 1.

La nacelle 1 est complétée par un système de sécurisation de l'ouverture et de la fermeture des demi-parties 9', 9" de la section arrière 9.

Ce système comprend pour chaque demi-partie 9', 9" un bras téléscopique 40 formant bielle et possédant une première extrémité 40b fixée sur le moteur 4 en aval de la section arrière 9 et une deuxième extrémité 40a fixée sur la demi-partie 9', 9' correspondante, avantageusement sur la structure interne 10. Ce système comprend en outre des moyens de verrouillage du bras télescopique 40 dans sa position étendue.

Un utilisateur souhaitant ouvrir la nacelle 1 procédera de la façon suivante.

Tout d'abord, il convient de dégager chaque demi-partie 9', 9" en ouvrant les capots 6', 6" mobiles constituants la structure externe 6b de la section médiane 6. La section médiane 6 étant située légèrement en avant de l'aile 2, les capots 6', 6" peuvent être pleinement ouverts sans être gênés par ladite aile 2. Eventuellement, le principe d'ouverture latérale selon l'invention pourra être appliqué au capots 6', 6", leurs axes de pivotement se situant alors préférentiellement en amont desdits capots 6', 6".

Il convient ensuite de déverrouiller les verrous 13 supérieurs et les moyens de verrouillage 15, 15' inférieurs équipant chaque demi-partie 9', 9". Le déverrouillage peut être manuel, électrique, commandé à distance ou autre.

Le déverrouillage s'effectue ensuite au niveau de la liaison entre le carter 6a et le cadre avant 16. En effet, la bordure externe 33 de la gorge 32 présentée par le carter 6a empêche le pivotement de la demi-partie 9', 9" en retenant le couteau 31. Le couteau 31 est extrait de ladite gorge 32 en déployant les.vérins inférieurs 20 et les vérins supérieurs 21 sur lesquels sont montés chaque demi-partie 9', 9". Ce faisant chaque demi-partie 9', 9" s'écarte latéralement, dégageant alors le couteau 31 de la gorge 32, et peut pivoter autour de l'axe de pivotement correspondant.

Le déploiement des vérins 20, 21 peut être simultané de manière à opérer une translation rectiligne de l'axe 25 de pivotement ou être différent pour les vérins supérieurs 20 et inférieurs 21, opérant alors une inclinaison de l'axe 25 de pivotement selon ce qui est souhaité.

Ainsi déverrouillé, un opérateur peut ouvrir manuellement les demi-parties 9', 9". Alternativement, la rotation peut être mécaniquement assistée ou totalement effectuée par un vérin électrique ou pneumatique (non représenté).

Il convient de noter que les figures représentent les demi-parties 9', 9" dans une configuration d'ouverture avoisinant les 90°. Bien évidemment, l'angle d'ouverture peut être supérieur ou inférieur à celui représenté, ledit angle d'ouverture étant défini selon l'accès au turboréacteur 4 requis.

Lors de l'ouverture, le bras téléscopique 40 formant bielle de sécurité passe tout d'abord par une phase de rétractation avant de passer par une phase d'élongation pour finir par être verrouillé dans la position d'allongement souhaitée correspondant à l'ouverture de la demi-partie 9', 9".

Alternativement ou en complément, la demi-partie 9' peut être verrouillée en position ouverte par l'intermédiaire de sa structure externe 9b en la rattachant par un crochet 50 ou des sangles à un oeillet (non visible) équipant le carter 6a.

Selon l'éventuelle inclinaison de l'axe 25 de pivotement, notamment lorsque celui-ci est orienté vers le bas de la nacelle et forme un angle aigu avec un axe vertical de la nacelle, la masse propre des demi-parties 9', 9" peut suffire à retenir les demi-parties 9', 9" en position d'ouverture sans autre besoin de sécurisation mécanique.

La fermeture de la nacelle 1 s'effectue en procédant aux étapes inverses. Lors du verrouillage du cadre avant 16 de chaque demi-partie 9', 9" sur le carter 6a, le couteau 31 est guidé dans la gorge 32 par la bordure externe 33 qui peut être éventuellement allongée radialement selon le débattement et le guidage souhaités.

En fermeture, on pourra prévoir une butée marquant la fin de la course de fermeture des demi-parties 9', 9", située sensiblement à 12 heures et/ou à 6 heures pour chaque demi-partie 9', 9". Chaque butée présentant une rainure apte à coopérer avec un système de roulettes de la demi-partie 9', 9" correspondante. Ceci permet de guider la demi-partie 9', 9" lors de son écartement latéral ainsi que lors de sa fermeture et de supporter une partie des efforts s'exerçant sur les vérins 20, 21.

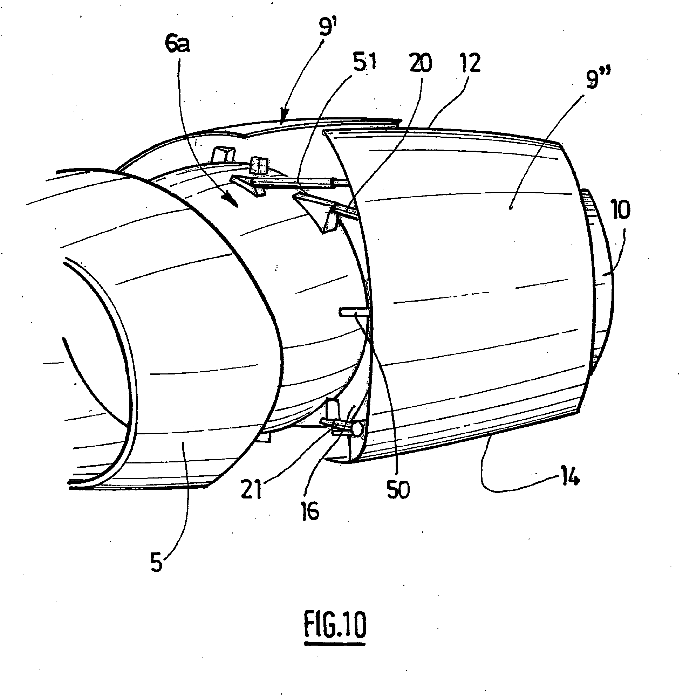

Comme représenté sur la figure 10 et comme expliqué précédemment, chaque demi-partie 9', 9" peut être actionnée mécaniquement par un vérin 51, de préférence électrique rattachée, d'une part, au carter 6a, et d'autre part, à la structure amont de la demi-partie 9', 9" correspondante.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention. Plus précisément, il convient de noter que le principe d'une ouverture latérale selon l'invention n'est pas limité aux demi-parties 9', 9" d'inverseur mais peut également être appliqué aux capots 6', 6" entourant le carter 6 de la soufflante. Dans ce cas, l'axe de pivotement sera de préférence situé en amont des capots 6', 6". De plus, le principe d'une ouverture latérale des capots n'est pas limitée à une nacelle fixée sous une aile 2 d'un avion mais peut être facilement adapté pour d'autres emplacements tel qu'un fuselage par exemple.

## Revendications

1. Nacelle (1) de turboréacteur (4) destinée à être rattachée à une structure (2) d'un avion par un mât (3) de liaison et comprenant au moins une partie mobile (9', 9") apte à être ouverte de manière à permettre un accès à l'intérieur de la nacelle, ladite partie mobile étant montée pivotante autour d'un axe (25) de pivotement orienté selon un axe sensiblement perpendiculaire au plan de la structure de l'avion à laquelle la nacelle est rattachée, ladite nacelle étant **caractérisée en ce que** l'axe (25) de pivotement est monté sur la nacelle grâce à des moyens de déplacement (20, 21) aptes à permettre une inclinaison dudit axe de pivotement par rapport à sa direction initiale.

2. Nacelle (1) selon la revendication 1, **caractérisée en ce que** l'axe (25) de pivotement est monté sur la nacelle grâce à des moyens de déplacement (20, 21) aptes à permettre un déplacement latéral dudit axe de pivotement.

3. Nacelle (1) selon l'une quelconque des revendications 1 ou 2, **caractérisée en ce que** la partie mobile (9', 9") comprend un couteau (31) apte à loger dans une gorge (32) ménagée dans une partie fixe (6a) de la nacelle et apte à empêcher la rotation de la partie mobile en l'absence d'un écartement préalable de l'axe (25) de pivotement en vue de dégager le couteau de la gorge.

4. Nacelle (1) selon l'une quelconque des revendications 1 à 3, **caractérisé en ce que** les moyens de déplacement sont des vérins (20, 21) possédant une première extrémité (20a, 21 a) ancrée dans une partie fixe (6a) de la nacelle et une deuxième extrémité (20b, 21 b) rattachée à l'axe (25) de pivotement de la partie mobile (9', 9").

5. Nacelle (1) selon la revendication 4, **caractérisé en ce que** les vérins (20, 21) sont des vérins électriques.

6. Nacelle (1) selon l'une quelconque des revendications 1 à 5, **caractérisée en ce que** au moins une partie mobile est une demi-partie (9', 9") d'inverseur de poussée.

7. Nacelle (1) selon la revendication 6, **caractérisée en ce que** l'axe (25) de pivotement est situé sensiblement au niveau d'un cadre avant (16) de l'inverseur de poussée.

8. Nacelle (1) selon l'une quelconque des revendications 1 à 7, **caractérisée en ce que** au moins une partie mobile est un capot de soufflante.

9. Nacelle (1) selon l'une quelconque des revendications 1 à 8, **caractérisée en ce qu'**elle comprend des moyens d'actionnement (51) aptes à faire pivoter la partie mobile (9', 9") autour de l'axe (25) de pivotement.

10. Nacelle (1) selon la revendication 9, **caractérisée en ce que** les moyens d'actionnement sont des vérins (51), de préférence électriques.

11. Nacelle (1) selon l'une quelconque des revendications 1 à 10, **caractérisée en ce qu'**elle comprend au moins une bielle (40) de sécurité possédant une première extrémité (40b) fixée sur une structure fixe (4) de la nacelle et une deuxième extrémité (40a) rattachée à la partie mobile (9', 9"), de préférence sur sa structure amont, ladite bielle de sécurité étant apte à passer alternativement d'une position dans laquelle elle empêche la fermeture de la partie mobile à une position dans laquelle elle permet sa fermeture, de préférence via une commande à distance.

## Claims

1. Nacelle (1) of a turbojet (4) designed to be attached to a structure (2) of an aircraft by a connecting pylon (3) and comprising at least one movable portion (9', 9") capable of being opened so as to allow access to the inside of the nacelle, said movable portion being mounted so as to pivot about a pivot shaft (25) oriented along a shaft that is substantially perpendicular to the plane of the structure of the aircraft to which the nacelle is attached, said nacelle being **characterized in that** the pivot shaft (25) is mounted on the nacelle thanks to movement means (20, 21) capable of allowing said pivot shaft to tilt relative to its initial direction.

2. Nacelle (1) according to Claim 1, **characterized in that** the pivot shaft (25) is mounted on the nacelle thanks to movement means (20, 21) capable of allowing a lateral movement of said pivot shaft.

3. Nacelle (1) according to either of Claims 1 and 2, **characterized in that** the movable portion (9', 9") comprises a knife (31) capable of housing in a groove (32) arranged in a fixed portion (6a) of the nacelle and capable of preventing the rotation of the movable portion in the absence of a prior separation of the pivot shaft (25) for the purpose of disengaging the knife from the groove.

4. Nacelle (1) according to any one of Claims 1 to 3, **characterized in that** the movement means are cylinders (20, 21) having a first end (20a, 21a) anchored in a fixed portion (6a) of the nacelle and a second end (20b, 21b) attached to the pivot shaft (25) of the movable portion (9', 9").

5. Nacelle (1) according to Claim 4, **characterized in that** the cylinders (20, 21) are electric cylinders.

6. Nacelle (1) according to any one of Claims 1 to 5, **characterized in that** at least one movable portion is a semiportion (9', 9") of a thrust reverser.

7. Nacelle (1) according to Claim 6, **characterized in that** the pivot shaft (25) is situated substantially at a front frame (16) of the thrust reverser.

8. Nacelle (1) according to any one of Claims 1 to 7, **characterized in that** at least one movable portion is a fan cover.

9. Nacelle (1) according to any one of Claims 1 to 8, **characterized in that** it comprises actuation means (51) capable of causing the movable portion (9', 9") to pivot about the pivot shaft (25).

10. Nacelle (1) according to Claim 9, **characterized in that** the actuation means are cylinders (51) that are preferably electric.

11. Nacelle (1) according to any one of Claims 1 to 10, **characterized in that** it comprises at least one safety connecting rod (40) having a first end (40b) attached to a fixed structure (4) of the nacelle and a second end (40a) attached to the movable portion (9', 9"), preferably on its upstream structure, said safety connecting rod being capable of passing alternately from a position in which it prevents the closure of the movable portion to a position in which it allows its closure, preferably via a remote control.

## Patentansprüche

1. Gondel (1) eines Turbostrahltriebwerks (4), die dazu bestimmt ist, an einer Struktur (2) eines Flugzeugs über einen Verbindungsmast (3) befestigt zu werden und mindestens einen beweglichen Teil (9', 9") enthält, der geöffnet werden kann, um einen Zugang ins Innere der Gondel zu erlauben, wobei der bewegliche Teil um eine Schwenkachse (25) schwenkbar montiert ist, die gemäß einer Achse im Wesentlichen lotrecht zur Ebene der Struktur des Flugzeugs, an der die Gondel befestigt ist, ausgerichtet ist, wobei die Gondel **dadurch gekennzeichnet ist, dass** die Schwenkachse (25) auf die Gondel mit Hilfe von Verschiebeeinrichtungen (20, 21) montiert wird, die eine Neigung der Schwenkachse bezüglich ihrer Anfangsrichtung ermöglichen können.

2. Gondel (1) nach Anspruch 1, **dadurch gekennzeichnet, dass** die Schwenkachse (25) auf die Gondel mit Hilfe von Verschiebeeinrichtungen (20, 21) montiert wird, die eine seitliche Verschiebung der Schwenkachse ermöglichen können.

3. Gondel (1) nach einem der Ansprüche 1 oder 2, **dadurch gekennzeichnet, dass** der bewegliche Teil (9', 9") ein Messer (31) enthält, das sich in eine Rille (32) einfügen kann, die in einem ortsfesten Teil (6a) der Gondel ausgebildet ist und die Drehung des beweglichen Teils in Abwesenheit eines vorherigen Entfernens der Schwenkachse (25) mit dem Ziel der Freigabe des Messers aus der Rille verhindern kann.

4. Gondel (1) nach einem der Ansprüche 1 bis 3, **dadurch gekennzeichnet, dass** die Verschiebeeinrichtungen Arbeitszylinder (20, 21) sind, die eine erstes Ende (20a, 21a), das in einem ortsfesten Teil (6a) der Gondel verankert ist, und ein zweites Ende (20b, 21b) besitzen, das an der Schwenkachse (25) des beweglichen Teils (9', 9") befestigt ist.

5. Gondel (1) nach Anspruch 4, **dadurch gekennzeichnet, dass** die Arbeitszylinder (20, 21) Elektrozylinder sind.

6. Gondel (1) nach einem der Ansprüche 1 bis 5, **dadurch gekennzeichnet, dass** mindestens ein beweglicher Teil ein halber Teil (9', 9") einer Schubumkehreinrichtung ist.

7. Gondel (1) nach Anspruch 6, **dadurch gekennzeichnet, dass** die Schwenkachse (25) sich im Wesentlichen in Höhe eines vorderen Rahmens (16) der Schubumkehreinrichtung befindet.

8. Gondel (1) nach einem der Ansprüche 1 bis 7, **dadurch gekennzeichnet, dass** mindestens ein beweglicher Teil ein Gebläsedeckel ist.

9. Gondel (1) nach einem der Ansprüche 1 bis 8, **dadurch gekennzeichnet, dass** sie Betätigungseinrichtungen (51) enthält, die den beweglichen Teil (9', 9") um die Schwenkachse (25) schwenken lassen können.

10. Gondel (1) nach Anspruch 9, **dadurch gekennzeichnet, dass** die Betätigungseinrichtungen vorzugsweise Elektrozylinder (51) sind.

11. Gondel (1) nach einem der Ansprüche 1 bis 10, **dadurch gekennzeichnet, dass** sie mindestens eine Sicherheitsschubstange (40) enthält, die ein erstes Ende (40b), das an einer ortsfesten Struktur (4) der Gondel befestigt ist, und ein zweites Ende (40a) besitzt, das am beweglichen Teil (9', 9"), vorzugsweise an seiner vorderen Struktur, befestigt ist, wobei die Sicherheitsschubstange abwechselnd von einer Stellung, in der sie das Schließen des beweglichen Teils verhindert, in eine Stellung übergehen kann, in der sie sein Schließen, vorzugsweise über eine Fernsteuerung, erlaubt.
